# EUROPÄISCHE PATENTSCHRIFT

(11) **EP 1 844 254 B1**
(45) Veröffentlichungstag und Bekanntmachung des Hinweises auf die Patenterteilung: **21.04.2010**
(21) Anmeldenummer: 05757027.7
(22) Anmeldetag: 21.05.2005
(51) Int. Cl.: F16L 11/08, F16L 11/12

(54) **WERKSTOFF FÜR DEN EINSATZ IM KONTAKT MIT TRINKWASSER SOWIE MIT MIKROBENBESTÄNDIGEN EIGENSCHAFTEN**
MICROBE -RESISTANT MATERIAL FOR CONTACTING WITH DRINKING WATER
MATERIAU RESISTANT AUX MICROBES DESTINE A ETRE UTLISÉ AU CONTACT DE L EAU POTABLE

(30) Priorität: 02.02.2005 DE 102005004735
(43) Veröffentlichungstag der Anmeldung: 17.10.2007
(73) Patentinhaber: ContiTech Schlauch GmbH, 30165 Hannover (DE)
(72) Erfinder: MAASS, Uwe, 22149 Hamburg (DE)
(74) Vertreter: Finger, Karsten
(86) Internationale Anmeldenummer: PCT/DE2005/000931
(87) Internationale Veröffentlichungsnummer: WO 2006/081781

(56) Entgegenhaltungen:
- EP-A- 0 294 181
- EP-A- 0 826 729
- US-A- 5 813 603
- US-A1- 2002 056 481

## Beschreibung

Die Erfindung betrifft einen Werkstoff für den Einsatz im Kontakt mit Trinkwasser sowie mit mikrobenbeständigen Eigenschaften, basierend auf einer vulkanisierten Kautschukmischung, umfassend eine unverschnittene Kautschukkomponente, die Butylkautschuk, Chlorbutylkautschuk oder Brombutylkautschuk ist, sowie Mischungsingredienzien, nämlich wenigstens ein Füllstoffsystem, Vernetzersystem und ein Verarbeitungshilfsmittel.

In der Offenlegungsschrift EP 0 294 181 A2 wird ein Werkstoff beschrieben, basierend auf einer vulkanisierten Kautschukmischung, umfassend einen unverschnittenen Brombutylkautschuk, Ruß als Füllstoff, Zinkoxid als Vulkanisationsaktivator und einen Beschleuniger, und zwar zur Verwendung eines Schlauches.

Die Patentschrift US 5 813 603 befasst sich mit der Verwendung einer vulkanisierten Kautschukmischung, umfassend Chlorbutylkautschuk, Ruß, Zinkoxid und einen Beschleuniger zur Herstellung einer Membran.

Die Offenlegungsschrift US 2002/0056481 A1 stellt einen Schlauch mit niedriger Permeationsrate vor, und zwar unter dem Aspekt eines Kältemittelschlauches. Die Schlauchseele ist dabei mit einer Barriereschicht in Form eines Harzes ausgestattet.

In der Offenlegungsschrift EP 0 826 729 A1 wird eine Barriereschicht aus einem EPDM/Butylkautschuk-Verschnitt für Wasserbehälter beschrieben.

Es ist ferner bekannt, Verschnitte aus Nitrilkautschuk (NBR) und Polyvinylchlorid (PVC) für elastische Lebensmittelschläuche einzusetzen, und zwar beispielsweise zum Durchleiten von Milch, Molke, Heißwasser bis 90°C, Speiseöle und Gemüsesäften. Ein derartiger Lebensmittelschlauch ist unter der Marke TRIX-MULTI-FOOD^{®} der PHOENIX AG bekannt.

In der Offenlegungsschrift WO 2004/110739 A1 wird ferner eine Trinkwasserleitung aus Kunststoff vorgestellt. Diese Leitung umfasst ein Basisrohr, bestehend aus einem vernetzten oder unvernetzten Polyolefinmaterial, sowie aus wenigstens einer polymeren Diffusions- und Verschleißschutzschicht, die beispielsweise aus Polyamiden, Polyestern oder einem Poly(ethen-co-vinylacetat) bestehen kann.

Im Hinblick auf einen mikrobenbeständigen Werkstoff wird insbesondere auf die Offenlegungsschrift DE 102 58 551 A1 verwiesen, in der eine Klärbeckenmembran beschrieben wird. Diese besteht aus NBR, einem Ethylen-Propolyen-Dien-Mischpolymerisat (EPDM) oder Silikonkautschuk. Auch ein EPDM/NBR-Verschnitt kommt zum Einsatz. Diese Klärbeckenmembran, die mittels einer Perforation gasdurchlässig ist, ist so gestaltet, dass zwecks dauerhafter Gasdurchlässigkeit der vulkanisierten Kautschukmischung ein abwasserbiologisch aktiver Inhibitor, und zwar in Form eines Mikroorganismeninhibitors und Algeninhibitors, beigemischt ist.

An Artikel auf der Basis einer vulkanisierten Kautschukmischung, die in Kontakt mit Trinkwasser kommen, werden zunehmend hohe Anforderungen gestellt. So dürfen diese keinen negativen Einfluss auf das Trinkwasser ausüben, insbesondere unter dem Aspekt von Geruch und Geschmack, und dürfen ferner nicht zur Verkeimung des Wassers beitragen. Diese Forderungen sind zum Beispiel in den Anforderungen der KTW-Empfehlung, Teil 1.3.13 und dem Arbeitsblatt W270 des DVGW festgelegt.

Im Hintergrund des hohen Anforderungsprofils zeichnet sich der neue Werkstoff auf der Basis der gattungsgemäßen Kautschukmischung dadurch aus, dass das Füllstoffsystem Ruß, Magnesiumsilikat und Kreide beinhaltet und dass das Vernetzersystem Zinkoxid als Vulkanisationsaktivator und Zink-N-dibenzyl-dithiocarbamat (ZBEC) als Beschleuniger umfasst.

Der Anteil der Kautschukkomponente beträgt 30 bis 70 Gew.-%, insbesondere 40 bis 55 Gew.-%. Innerhalb des Füllstoffsystems beträgt der Anteil des Rußes maximal 30 Gew.-%, insbesondere maximal 20 Gew.-%. Das Verarbeitungshilfsmittel ist beispielsweise Stearinsäure. Weitere Mischungsingredienzien sind gegebenenfalls ein Alterungsschutzmittel und Stabilisatoren. Diesbezüglich wird auf den allgemeinen Stand der Kautschukmischungstechnologie verwiesen.

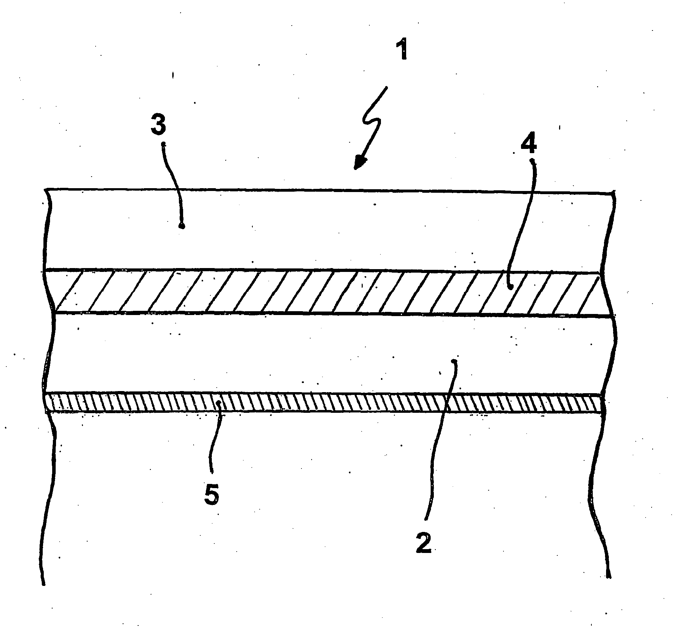

Die Erfindung wird nun anhand von zwei Ausführungsbeispielen (A; Trinkwasserschlauch) - hier in Verbindung mit einer schematischen Darstellung - sowie (B; Klärbeckenmembran) näher vorgestellt.
A) Die einzige Abbildung (Längsschnitt einer Schlauchwand) zeigt einen Trinkwasserschlauch 1, umfassend eine Seele 2, eine Decke 3, einen eingebetteten Festigkeitsträger 4 sowie eine Innenschicht 5, die direkt mit dem Trinkwasser in Verbindung steht.
Der erfindungsgemäße Werkstoff gelangt nun wenigstens für die Seele 2 zur Anwendung, wobei auf folgende Zusammensetzung der Kautschukmischung verwiesen wird.

| Bestandteil | Anteil in Gew.-% |
|---|---|
| Brombutylkautschuk | 44,0 |
| Ruß | 17,0 |
| Magnesiumsilikat | 26,0 |
| Kreide | 8,6 |
| Stearinsäure | 0,5 |
| Zinkoxid | 3,5 |
| Beschleuniger ZBEC | 0,4 |
| | 100,0 |

Die Kautschukmischung für die Seele 2 ist weichmacherfrei.
Die Decke 3 kann die gleiche Zusammensetzung wie die Seele 2 aufweisen. Zumeist ist in diese jedoch zusätzlich ein Weichmacher beigemischt, dessen Anteil maximal 15 Gew.-%, insbesondere maximal 10 Gew.-%, beträgt. Im vorliegenden Ausführungsbeispiel beträgt der Weichmacheranteil der Deckenmischung 7,6 Gew.-%, wobei bei ansonsten gleicher Zusammensetzung lediglich das Füllstoffsystem, umfassend den Ruß, das Magnesiumsilikat und die Kreide, um diesen Wert reduziert ist.
Die Seelenmischung kann dabei direkt im Kontakt mit dem Trinkwasser stehen oder als Sperrschicht hinter einer Innenschicht 5 angebracht sein. Diese Innenschicht in Form einer Kunststofffolie besteht aus Polyethylen, das insbesondere unvernetzt ist.
Weist der Schlauch 1 weitere Schichten auf, beispielsweise im Rahmen eines zweilagigen Festigkeitsträgersystems mit einer Zwischenschicht, so wird insbesondere die Deckenmischung verwendet.
Die Gesamtmasse in Gew.-% bezieht sich hier auf den jeweiligen Schlauchteil (Seele, Decke, Zwischenschicht).
B) Der erfindungsgemäße Werkstoff wird zur Herstellung einer Klärbeckenmembran in Form einer Tellermembran, Schlauchmembran oder Plattenbelüftermembran verwendet, wobei beispielsweise die unter dem Ausführungsbeispiel (A) erwähnte Seelenmischung zum Einsatz gelangen kann.
Im Hinblick auf eine dauerhafte Gasdurchlässigkeit wird dem Werkstoff insbesondere ein abwasserbiologisch aktiver Inhibitor beigemischt. Hinsichtlich Details wird auf die Offenlegungsschrift DE 102 58 551 A1 verwiesen.

### Bezugszeichenliste

- **1**: Schlauch (Trinkwasserschlauch)
- **2**: Seele
- **3**: Decke
- **4**: Festigkeitsträger
- **5**: Innenschicht (Kunststofffolie)

## Patentansprüche

1. Werkstoff für den Einsatz im Kontakt mit Trinkwasser sowie mit mikrobenbeständigen Eigenschaften, basierend auf einer vulkanisierten Kautschukmischung, umfassend eine unverschnittene Kautschukkomponente, die Butylkautschuk, Chlorbutylkautschuk oder Brombutylkautschuk ist, sowie Mischungsingredienzien, nämlich wenigstens ein Füllstoffsystem, Vernetzersystem und ein Verarbeitungshilfsmittel, **dadurch gekennzeichnet, dass** das Füllstoffsystem Ruß, Magnesiumsilikat und Kreide beinhaltet und dass das Vernetzersystem Zinkoxid als Vulkanisationsaktivator und Zink-N-dibenzyl-dithiocarbamat als Beschleuniger umfasst.

2. Werkstoff nach Anspruch 1, **dadurch gekennzeichnet, dass** der Anteil der Kautschukkomponente 30 bis 70 Gew.-% beträgt.

3. Werkstoff nach Anspruch 2, **dadurch gekennzeichnet, dass** der Anteil der Kautschukkomponente 40 bis 55 Gew.-% beträgt.

4. Werkstoff nach einem der Ansprüche 1 bis 3, **dadurch gekennzeichnet, dass** der Anteil an Ruß maximal 30 Gew.-% beträgt.

5. Werkstoff nach Anspruch 4, **dadurch gekennzeichnet, dass** der Anteil an Ruß maximal 20 Gew.-% beträgt.

6. Werkstoff nach einem der Ansprüche 1 bis 5, **dadurch gekennzeichnet, dass** die Kautschukmischung weichmacherfrei ist.

7. Verwendung des Werkstoffes nach einem der Ansprüche 1 bis 6 zur Herstellung eines Schlauches (1), umfassend eine Seele (2) und Decke (3), insbesondere in Verbindung mit einem eingebetteten Festigkeitsträger (4), sowie gegebenenfalls weiteren Schichten, wobei werkstoffmäßig wenigstens die Seele für den Einsatz im Kontakt mit Trinkwasser zur Anwendung gelangt sowie mit mikrobenbeständigen Eigenschaften ausgestattet ist.

8. Verwendung des Werkstoffes nach Anspruch 7 in Verbindung mit Anspruch 6, wobei die Kautschukmischung für die Seele (2) weichmacherfrei ist.

9. Verwendung des Werkstoffes nach Anspruch 7 oder 8 in Verbindung mit einem der Ansprüche 1 bis 5, wobei die Kautschukmischung für die Decke (3) einen Weichmacher aufweist.

10. Verwendung des Werkstoffes nach Anspruch 9, wobei der Anteil des Weichmachers maximal 15 Gew.-% beträgt.

11. Verwendung des Werkstoffes nach Anspruch 10, wobei der Anteil des Weichmachers maximal 10 Gew.-% beträgt.

12. Verwendung des Werkstoffes nach einem der Ansprüche 7 bis 11, wobei die Seele (2) mit einer Innenschicht (5), insbesondere Folienschicht, ausgestattet ist, die direkt mit dem Trinkwasser in Verbindung steht.

13. Verwendung des Werkstoffes nach Anspruch 12, wobei die Innenschicht (5) aus einem Kunststoff, insbesondere Polyethylen, besteht, das wiederum insbesondere unvernetzt ist.

14. Verwendung des Werkstoffes nach einem der Ansprüche 1 bis 6 zur Herstellung einer Membran, insbesondere Klärbeckenmembran.

15. Verwendung des Werkstoffes nach Anspruch 14 in Verbindung mit Anspruch 6, wobei die Kautschukmischung für die gesamte Membran weichmacherfrei ist.

## Claims

1. Material for use in contact with drinking water and also having microbe-resistant properties, based on a vulcanized rubber mixture, encompassing an unblended rubber component which is butyl rubber, chlorobutyl rubber or bromobutyl rubber, and also mixture ingredients, namely at least one filler system and crosslinking-agent system and one processing aid, **characterized in that** the filler system includes carbon black, magnesium silicate and chalk, and that the crosslinking-agent system encompasses zinc oxide as vulcanization activator and zinc N-dibenzyldithiocarbamate as accelerator.

2. Material according to Claim 1, **characterized in that** the proportion of the rubber component is from 30 to 70% by weight.

3. Material according to Claim 2, **characterized in that** the proportion of the rubber component is from 40 to 55% by weight.

4. Material according to any of Claims 1 to 3, **characterized in that** the proportion of carbon black is at most 30% by weight.

5. Material according to Claim 4, **characterized in that** the proportion of carbon black is at most 20% by weight.

6. Material according to any of Claims 1 to 5, **characterized in that** the rubber mixture is plasticizer-free.

7. Use of the material according to any of Claims 1 to 6 for the production of a hose (1), encompassing a core (2) and cover (3), in particular in conjunction with embedded reinforcement (4), and also, if appropriate, further layers, where at least the material of the core is used in contact with drinking water and has been equipped with microbe-resistant properties.

8. Use of the material according to Claim 7 in conjunction with Claim 6, where the rubber mixture for the core (2) is plasticizer-free.

9. Use of the material according to Claim 7 or 8 in conjunction with any of Claims 1 to 5, where the rubber mixture for the cover (3) comprises a plasticizer.

10. Use of the material according to Claim 9, where the proportion of the plasticizer is at most 15% by weight.

11. Use of the material according to Claim 10, where the proportion of the plasticizer is at most 10% by weight.

12. Use of the material according to any of Claims 7 to 11, where the core (2) has been equipped with an inner layer (5), in particular foil layer, which is in direct contact with the drinking water.

13. Use of the material according to Claim 12, where the inner layer (5) is composed of a plastic, in particular polyethylene, which in turn is in particular uncrosslinked.

14. Use of the material according to any of Claims 1 to 6 for the production of a membrane, in particular settling-tank membrane.

15. Use of the material according to Claim 14 in conjunction with Claim 6, where the rubber mixture for the entire membrane is plasticizer-free.

## Revendications

1. Matériau destiné à être utilisé au contact avec de l'eau potable et présentant des propriétés de résistance aux microbes, à base d'un mélange de caoutchouc vulcanisé comportant un composé de caoutchouc non découpé qui est du caoutchouc butyle, du caoutchouc chlorobutyle ou du caoutchouc bromobutyle ainsi que des ingrédients de mélange, à savoir au moins un système de charges, un système de réticulation et un adjuvant de traitement,
**caractérisé en ce que**
le système de charges contient du noir de carbone, du silicate de magnésium et de la craie et
**en ce que** le système de réticulation contient de l'oxyde de zinc comme activateur de vulcanisation et du dithiocarbamate de zinc et de N-benzyle comme accélérateur.

2. Matériau selon la revendication 1, **caractérisé en ce que** sa teneur en composant de caoutchouc est de 30 à 70 % en poids.

3. Matériau selon la revendication 2, **caractérisé en ce que** sa teneur en composant de caoutchouc est comprise entre 40 et 55 % en poids.

4. Matériau selon l'une des revendications 1 à 3, **caractérisé en ce que** sa teneur en noir de carbone est d'au plus 30 % en poids.

5. Matériau selon la revendication 4, **caractérisé en ce que** sa teneur en noir de carbone est d'au plus 20 % en poids.

6. Matériau selon l'une des revendications 1 à 5, **caractérisé en ce que** le mélange de caoutchouc ne présente pas de plastifiant.

7. Utilisation du matériau selon l'une des revendications 1 à 6 pour la fabrication d'un tuyau flexible (1) comprenant une âme (2) et un recouvrement (3), en particulier en association avec un renfort (4) incorporé ainsi qu'éventuellement d'autres couches, au moins le matériau de l'âme étant destiné à être utilisée en contact avec l'eau potable et présentant des propriétés de résistance aux microbes.

8. Utilisation du matériau selon la revendication 7 associée à la revendication 6, dans laquelle le mélange de caoutchouc pour l'âme (2) est exempt de plastifiant.

9. Utilisation du matériau selon les revendications 7 ou 8 associées à l'une des revendications 1 à 5, dans laquelle le mélange de caoutchouc du recouvrement (3) présente un plastifiant.

10. Utilisation du matériau selon la revendication 9, dans laquelle la teneur en plastifiant est d'au plus 15 % en poids.

11. Utilisation du matériau selon la revendication 10, dans laquelle la teneur en plastifiant est d'au plus 10 % en poids.

12. Utilisation du matériau selon l'une des revendications 7 à 11, dans laquelle l'âme (2) est dotée d'une couche intérieure (5), en particulier d'une couche de film, en communication directe avec l'eau potable.

13. Utilisation du matériau selon la revendication 12, dans laquelle la couche intérieure (5) est constituée d'une matière synthétique, en particulier un polyéthylène en particulier non réticulé.

14. Utilisation du matériau selon l'une des revendications 1 à 6 pour la fabrication d'une membrane et en particulier d'une membrane pour bassin de clarification.

15. Utilisation du matériau selon la revendication 14 associée à la revendication 6, dans laquelle le mélange de caoutchouc de la totalité de la membrane est exempt de plastifiant.
